# EUROPEAN PATENT SPECIFICATION

(11) **EP 0 644 018 B1**
(45) Date of publication and mention of the grant of the patent: **26.03.1997**
(21) Application number: 94114478.4
(22) Date of filing: 14.09.1994
(51) Int. Cl.: B23Q 1/01, B23Q 11/00

(54) **Rail construction for machine tool**
Schienenanordnung für Werkzeugmaschinen
Construction de rail pour une machine-outil

(30) Priority: 17.09.1993 JP 231996/93
(43) Date of publication of application: 22.03.1995
(73) Proprietor: AISIN SEIKI KABUSHIKI KAISHA, Kariya City Aichi Pref. (JP)
(72) Inventor: Mizuno, Sadao, Nagoya city, Aichi Pref. (JP); Hoshino, Akinori, Toyota city, Aichi Pref. (JP)
(74) Representative: Kügele, Bernhard

(56) References cited:
- EP-A- 0 253 930
- EP-A- 0 324 125
- DE-A- 3 818 361
- GB-A- 2 052 514
- US-A- 3 618 432
- PATENT ABSTRACTS OF JAPAN vol. 8, no. 249 (M-338) 15 November 1984 & JP-A-59 124 533 (OKUMA TEKKOSHO K.K. ET AL) 18 July 1984
- WERKSTATT UND BETRIEB, vol.123, no.9, September 1990, MUNCHEN DE pages 707 - 710, XP175480 PRÖSSLER 'Mineralguss - alternativer Konstruktionswerkstoff für den Maschinenbau'

## Description

### BACKGROUND OF THE INVENTION

The present invention relates to a rail construction for a machine tool.

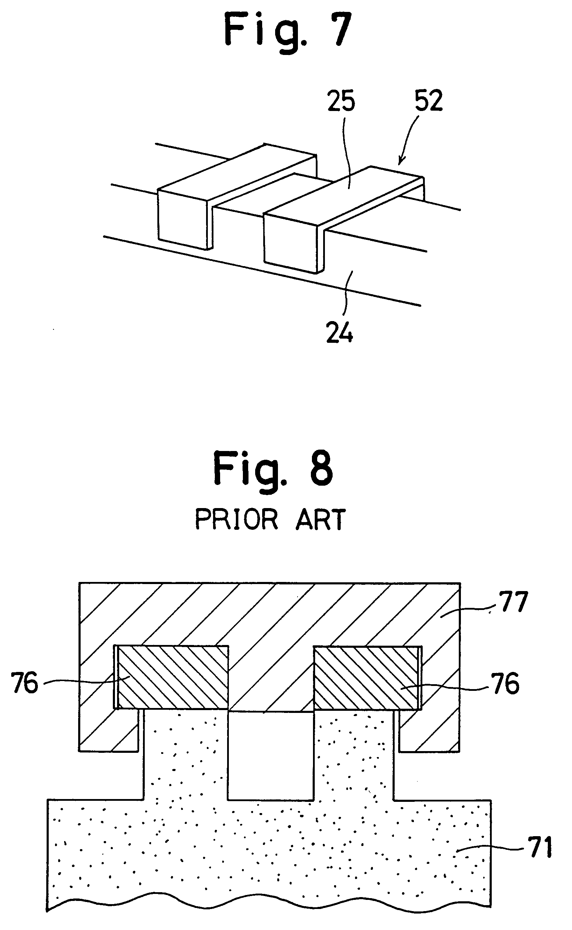

As shown in Fig. 8, a conventional machine tool includes a bed 71 made of a resin concrete, a pair of laterally spaced rails 76 extending along a lengthwise direction of the bed 71, and a slide table 77 on which a head portion (not shown) is mounted. The rail 76 is made of a steel. Whenever the table 77 moves along the rail 76, due to the friction therebetween a heat is generated. Due to the fact that the resin concrete is less than the rail 76 in thermal conductivity, the resulting sliding heat will cause a curvature or bent of the rail 76 relative to the bed 71. Such a curvature will prevent a smooth movement of the table 77.

JP-A-59.124.533, the closest prior art, discloses a resin concrete structure comprising guide rails made of steel and supporting member made of epoxy concrete to secure high accuracy.

EP-A-0.253.390 discloses a concrete support structure comprising a "V" metallic guide rails on which is sliding a concrete body.

### SUMMARY OF THE INVENTION

It is, therefore, an object of the present invention to provide a rail construction for a machine tool without the foregoing drawbacks.

Another object of the present invention is to provide a rail construction for a machine tool in which each rail is free from a thermal curvature.

In order to attain the foregoing objects, a rail construction for a machine tool comprising a bed made of a resin concrete and a pair of laterally spaced rails, extending along a lengthwise direction of the bed is characterised in that the pair of laterally spaced rails is made of a resin concrete and has an upper portion on which a slidable table is mounted for a movement thereof, and in that a reinforcing member is inserted into each of the rails such that the reinforcing member is out of concern with the movement of the slide table along the upper surface of each of the rails.

### BRIEF DESCRIPTION OF THE DRAWINGS

The above and other objects, features and advantages of the present invention will be more apparent and more readily appreciated from the following detailed description of preferred exemplarily embodiments of the present invention, taken in connection with the accompanying drawings, in which;
Fig.1 is a schematic view of a machine tool to which the present invention is applied;
Fig.2 is a cross-sectional view taken along line X-X in Fig.1 for illustrating a first embodiment of the present invention;
Fig.3 is a view showing a principal portion of a second embodiment of the present invention;
Fig.4 is a view showing a principal portion of a third embodiment of the present invention;
Fig.5 is a view showing a principal portion of a fourth embodiment of the present invention;
Fig.6 is a view showing a principal portion of a fifth embodiment of the present invention;
Fig. 7 is a view showing a perspective view of the principal portion of shown in Fig. 6; and
Fig.8 is a cross-sectional view of a conventional rail structure of a machine tool.

### DESCRIPTION OF PREFERRED EMBODIMENTS

Preferred embodiments of the present invention will be described hereinunder in detail with reference to the accompanying drawings.

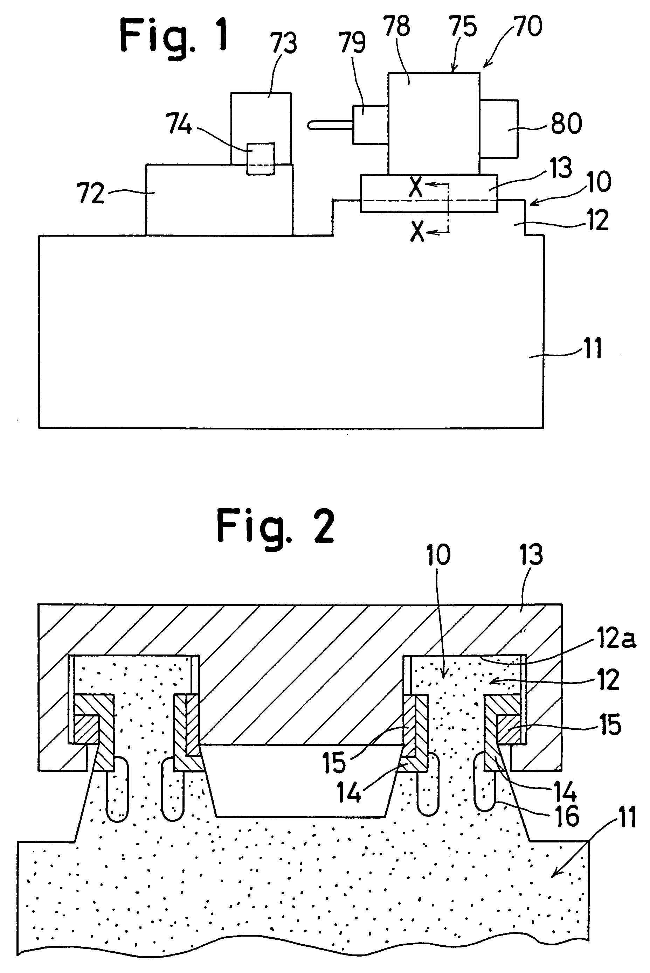

Referring first to Figs.1 and 2, a machine tool 70 includes a bed 11 on which a base member 72 is provided. On the base member 72, there is mounted a workpiece 73, which is secured thereto via a clamp member 74. A head stock 75 is mounted on the table 11 so as to oppose to the workpiece 73. The head stock 75 has a rectangular sliding rail means 10 which will be detailed later, a slide table 13, a column 78 secured thereto, a head portion 79 for machining the workpiece 73, and a motor 80 for driving the head portion 79.

The rectangular sliding rail means 10 has a pair of laterally spaced rails 12 each of which is extended in the lengthwise direction of the bed 11. The rail 12 is formed integrally with the bed 11. As a raw material of each of the bed 11 and the rail 12, so-called resin concrete. In order to obtain the resin concrete, conglomerate pebbles or broken stones are mixed into a resin and formed into a mass. In this embodiment, as the pebble or stone and the resin, gabbro and epoxy resin are used, respectively. The thermal conductivity of the resin concrete is less than that of a metal.

An upper surface 12a of the rail 12 supports slidably the sliding table 13. A friction or sliding heat generated when the sliding table 13 slides along the rail 12 is difficult to be accumulated in the bed 11 due to its less thermal conductivity. Thus, the thermal deformation of the bed 11 can be prevented. It is to be noted that the friction heat is absorbed in the sliding table 13 which is set to be cooled by cutting oil while the mache tool 70 is in operation, which leads to that as a whole no member is affected by the foregoing friction heat.

In order to establish a smooth guidance of the sliding table 13 along the rail 12, a set of steel members 14 and 15 which are connected with each other via a bolt (not shown) are secured or fixed to each lengthwise side of the rail 12 in an insert manner. For rigid connection of the steel 14 to the bed 11, an iron reinforcing rod 16 is used which is welded to the steel 14. The steels 14 and 15 are also used to reinforce the rail 12 against a force applied thereto along a horizontal direction in Fig. 2. As the steel 14 (15), one of iron-family metals is employed.

It is to be noted that as well known the resin concrete is relatively large in vibration damping ratio. Thus, when machining the workpiece 73, the time duration required for absorbing a vibration generated at the workpiece 73 becomes shorter.

For obtaining the foregoing structure, the following procedure is taken. That is to say, opposite end portions of the iron reinforcing rod 16 which is formed into an oval shape are welded to the reinforcing metal 14. Next, such reinforcing metal 14 and iron reinforcing rod 16 are allocated or positioned within a cavitation (not shown) having a cross-section which is identical with the bed 11 having the rails 12. Under the resultant condition, an amount of the resin concrete as mentioned above which is in the form of a liquid is poured or supplied into the cavitation and is formed into a solid mass. The resultant mass is removed from the cavitation and the reinforcing metal 15 is secured to the reinforcing metal 14 via the bolt. Thus, the bed 11 including the rails 12 is obtained.

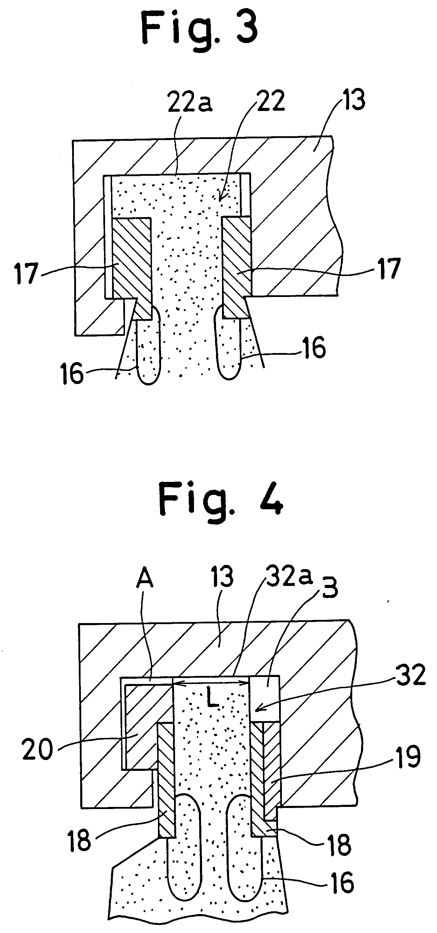

As shown in Fig. 3, instead of the foregoing reinforcing steels or metals 14 and 15, a sole reinforcing steel 17 which is in the form of an integration thereof can be used.

In Fig.4, the width L of the rail 12 is set to be less than that shown in Fig.3 and spaces A (B) is defined between the slide table 13 and a reinforcing steel 20 secured to a reinforcing steel 18 (a set of reinforcing steels 18 and 20).

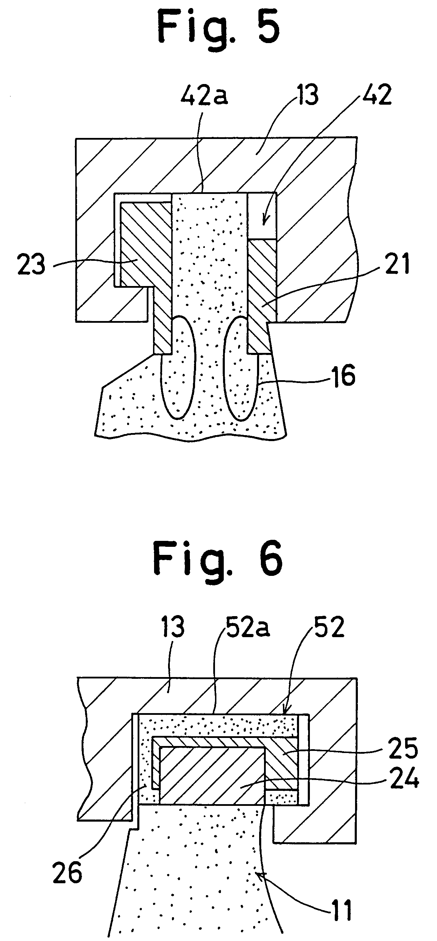

Instead of the foregoing reinforcing steels or metals 20 and 18 (18 and 19) shown in Fig. 4, as shown in Fig.5 a sole reinforcing steel 21(23) which is in the form of an integration thereof can be used.

As seen from Figs.6 and 7, a first reinforcing member 24 is extended along a sliding direction of a slide table 13. On the first reinforcing member 24, a plurality of spaced second reinforcing member 25 are mounted. Such first reinforcing member 24 and second reinforcing member 25 are embedded in a rail 12 in such a manner that a right side of each of the second reinforcing member 25 is exposed to the outside. The rail 12 is fixed to the bed 11.

The inventions has thus been shown and described with reference to specific embodiments.

## Claims

1. A rail construction for a machine tool (70) comprising a bed (11) made of a resin concrete and a pair of laterally spaced rails (12), extending along a lengthwise direction of the bed, characterised in that
the pair of laterally spaced rails (12) is made of a resin concrete and has an upper portion (12a) on which a slidable table (13) is mounted for a movement thereof; and in that
a reinforcing member (14, 15) is inserted into each of the rails (12) such that the reinforcing member (14, 15) is out of concern with the movement of the slide table (13) along the upper surface (12a) of each of the rails (12).

2. A rail contruction as set forth in claim 1, wherein the bed (11) and the rails (12) are formed integrally with each other.

3. A rail contruction as set forth in claim 1, wherein each of the resin concrete includes conglomerate pebbles which are mixed into a resin.

4. A rail contruction as set forth in claim 3, wherein the resin is an epoxy resin and each of the pebbles is gabbro.

5. A rail contruction as set forth in claim 1, wherein the bed (11) and the rails (12) are in separation and connected with each other.

6. A rail contruction as set forth in claim 1, wherein the reinforcing member (14,15) is divided into two parts which are secured with each other.

7. A rail contruction as set forth in claim 1, wherein a space is defined which is enclosed by the slide table (13), the rail (12) and the reinforcing member (14,15).

## Patentansprüche

1. Schienenanordnung für eine Werkzeugmaschine (70) mit einem aus Harz-Beton hergestellten Bett (11) und einem Paar von seitlich voneinander in einem Abstand liegenden Schienen (12), die sich entlang der Längsrichtung des Bettes erstrecken, dadurch gekennzeichnet, daß
das Paar von seitlich voneinander in einem Abstand liegenden Schienen (12) aus Harz-Beton hergestellt ist und einen oberen Teil (12a) aufweist, auf dem ein gleitbarer Tisch (13) zu seiner Bewegung montiert ist, und daß
in jede der Schienen (12) ein Verstärkungselement (14, 15) eingesetzt ist, so daß das Verstärkungselement (14, 15) mit der Bewegung des Gleittisches (13) entlang der oberen Fläche (12a) jeder der Schienen (12) nichts zu tun hat.

2. Schienenanordnung nach Anspruch 1, bei der das Bett (11) und die Schienen (12) miteinander einteilig ausgebildet sind.

3. Schienenanordnung nach Anspruch 1, bei der jeder Harz-Beton in ein Harz eingemischten Konglomeratkies aufweist.

4. Schienenanordnung nach Anspruch 3, bei der das Harz ein Epoxyharz ist und jeglicher Kies Gabbro ist.

5. Schienenanordnung nach Anspruch 1, bei der das Bett (11) und die Schienen (12) getrennt voneinander und miteinander verbunden sind.

6. Schienenanordnung nach Anspruch 1, bei der das Verstärkungselement (14, 15) in zwei aneinander befestigte Teile geteilt ist.

7. Schienenanordnung nach Anspruch 1, bei der ein Zwischenraum begrenzt ist, der vom Gleittisch (13), der Schiene (12) und dem Verstärkungselement (14, 15) eingeschlossen ist.

## Revendications

1. Construction de rail pour une machine-outil (70) comprenant un banc (11) réalisé en béton à la résine et une paire de rails espacés latéralement l'un de l'autre (12), s'étendant dans le sens de la longueur du banc, caractérisée en ce que :
la paire de rails espacés l'un de l'autre (12) est réalisé en béton à la résine et comporte une partie supérieure (12a) sur laquelle est monté un plateau coulissant (13) pour son déplacement; et en ce que
un élément de renforcement (14, 15) est inséré dans chacun des rails (12) d'une façon telle que l'élément de renforcement (14, 15) n'est pas concerné par le déplacement du plateau coulissant (13) le long de la surface supérieure (12a) de chacun des rails (12).

2. Construction de rail selon la revendication 1, dans laquelle le banc (11) et les rails (12) forment une même pièce.

3. Construction de rail selon la revendication 1, dans laquelle chaque béton à la résine comprend des galets d'un aggloméré qui sont mélangés dans une résine.

4. Construction de rail selon la revendication 3, dans laquelle la résine est une résine époxy et chacun des galets est du gabbro.

5. Construction de rail selon la revendication 1, dans laquelle le banc (11) et les rails (12) sont séparés l'un de l'autre et connectés l'un à l'autre.

6. Construction de rail selon la revendication 1, dans laquelle l'élément de renforcement (14, 15) est divisé en deux parties qui sont fixées l'une à l'autre.

7. Construction de rail selon la revendication 1, dans laquelle un espace est défini qui est enfermé par le plateau coulissant (13), le rail (12) et l'élément de renforcement (14, 15).
